# EUROPEAN PATENT SPECIFICATION

(11) **EP 2 004 927 B1**
(45) Date of publication and mention of the grant of the patent: **21.12.2011**
(21) Application number: 07734220.2
(22) Date of filing: 28.03.2007
(51) Int. Cl.: E04F 13/14, H01J 9/52, B03B 9/06, C04B 14/22, E04C 2/02

(54) **End-products for civil and urban building**
Endprodukte für zivile und städtische Gebäude
Produits finis pour bâtiments civils et urbains

(30) Priority: 30.03.2006 IT VI20060088; 24.07.2006 IT VI20060234
(43) Date of publication of application: 24.12.2008
(73) Proprietor: ECO. EL. S.r.l., 36073 Cornedo Vicentino (VI) (IT)
(72) Inventor: CORA', Marco, Enrico, I-36078 Valdagno-Vicenza (IT)
(74) Representative: Iannone, Carlo Luigi
(86) International application number: PCT/IB2007/000900
(87) International publication number: WO 2007/113667

(56) References cited:
- EP-A- 1 264 638
- EP-A1- 0 524 578
- WO-A-2005/121041
- DE-A1- 4 130 531
- DE-A1- 4 418 535
- DE-A1- 19 755 626
- GB-A- 975 756
- JP-A- 2002 327 403
- US-A- 3 574 801
- US-A- 5 364 672
- US-A- 5 879 601
- US-B1- 6 350 501
- US-B1- 6 770 328

## Description

The present invention relates to a series of end-products, which can be used for civil and urban building, which are easy to use.

The end-products are mainly produced with layers consisting of fragments or granules, in particular of crystal, having various forms and dimensions, joined to each other, inside certain moulds, by means of resinous chemical binders, and are characterized in that they have an extremely light structure and ornamental impact with a rare aesthetical effect.

In particular, the fragments or granules, reduced to suitable forms and dimensions are obtained by means of adequate crushing, reclaiming and smoothing processing of the crystal of kinescopes, which, in this way, can be re-used and recycled, whereas the end-products, obtained economically and rapidly, by forming a paste in which these granules are bound by means of resins, can be used for civil and/or urban fittings i.e. for purely ornamental purposes, such as small common objects.

Panels, also shaped, suitable for being positioned in mural structures or for use as table surfaces, as well as diffusion screens of lamps or similar products, can be produced starting from these compounds, containing crystal or resin granules as binding element, by simply coupling at least one reflecting or transparent panel.

If the end-products are used as mural panels or panels for false ceilings and are therefore important for lightening the whole structure, it is also possible to couple the layers of glassy material, with or without reflecting or transparent panels, with one or more layers or films of light plastic material containing air (or with air bubbles, such as so-called "bubble" material), possibly curved and/or suitably shaped.

Reflecting or transparent panels which can be used, either flanked or alternating, are layers of silver paper and/or specific light panels made of ferrous or non-ferrous material, having various forms and dimensions; for obtaining a better visual effect, on the other hand, certain colouring substances can be added to the resinous chemical binder, or the panels themselves can be coloured or decorated with specific colours and inks.

As already mentioned, the fragments or granules, reduced to suitable forms and dimensions, can be advantageously obtained from glass material in general or by means of adequate crushing, reclaiming and smoothing processing of crystal coming from waste products (such as kinescopes of televisions or computer screens) which can therefore be re-used and recycled as raw material, whereas the end-products, obtained economically and rapidly, by forming a paste in which these granules are bound by means of resins, can be used for civil and/or urban fittings or for strictly ornamental purposes, such as small objects and fittings in general.

Problems relating to the disposal and recycling of glass material in general and of the crystal of kinescopes in particular, are known; the difficulties encountered during separation operations of glass material and crystal from other materials, in particular for materials which are difficult to treat (such as cathode tubes of kinescopes) are also known, both from a technical and environmental point of view, in order to obtain total reuse of the glass material, as well as the costly disposal operations to which these products must be subjected.

Said separation operations of glass material and crystal from other materials are known, for example, from EP 1264638 A and from US 5879601 A.

It would consequently be useful to envisage an alternative use of glass material and/or crystal, without having to dispose of it, in order to obtain a progressive and constant reduction of the non-recoverable waste fraction.

For example, end-products for civil and urban building made of a glass-based material and having the technical features disclosed in the preamble of claim 1 are known from GB 975756 A and DE 4418535 A1.

However, the coating panels and ornamental items in general produced with end-products made of a glass-based material normally have a heavy and cumbersome structure, which completely limit their utilization; this drawback should also be avoided.

An objective of the present invention is therefore to avoid the drawbacks mentioned above and, in particular, to produce end-products for civil and urban building which progressively reduce the non-recoverable waste fraction, to be sent for disposal, in order to create a product having a high environmental efficiency and which can be continually recycled.

Another objective of the invention is to produce end-products for civil and urban building, which are extremely reliable and which allow an evident saving in recycling and disposal costs.

A further objective of the present invention is to provide important end-products for civil and urban building, obtained simply and economically and easy to use, which can be adopted as decorative items and/or for civil and urban fittings, such as coating portions, panels and/or flooring, in substitution of the inert materials currently used for these purposes.

Another objective of the present invention is to provide end-products for civil and urban building, which have a considerably light construction and/or structure, with excellent soundproofing and non-polluting properties and which can be used, for example, as coating panels, light diffusion screens, furnishing fittings and ornamental items in general.

Yet another objective of the invention is to provide a series of coating and/or ornamental end-products, having an important and rare aesthetical impact, obtained industrially simply and economically, which can be used as decorative elements and/or for civil and urban fittings, such as coating portions, panels, flooring and/or ceilings, in substitution of or as an alternative to or as a complement of current structures made of plasterboard and inert materials currently used for these purposes.

These and other objectives are achieved by producing end-products for civil and urban building according to claim 1 enclosed; other detailed characteristics of said end-products are indicated in the subsequent claims.

Coating panels for walls, ceilings and tables, coatings for buildings, construction blocks, floor casts, marble-chip floor tiles, tiles and end-products, used as fitting accessories for civil and urban building, are normally produced using plasterboard and/or a grit of various stones, granites, marbles and common stones, finely crushed and joined by means of mortar and cement.

Many of these applications, moreover, do not require that the end-products have a considerable resistance to compression and/or tensile stress, as a good wear resistance, a sufficient flame resistance and a pleasant and qualitatively valid appearance are sufficient.

During a series of experiments and research tests aimed at finding alternative utilizations for the use of plastic and/or glass material, the appreciable beauty and lightness of the structures obtained according to the invention, in addition to the light effects and shades and transparency that these structures, possibly treated with resins and/or specific colouring substances, produce, were advantageously and surprisingly noticed.

Further ornamental effects are produced by the same structures in contact with transparent or reflecting panels and/or with layers of coloured or silver paper and/or with other suitably coloured panels.

The present invention therefore proposes end-products obtained by smoothing fragments or granules of glass or crystal and glass-based material in general, mixing it with at least one chemical binding element, for example resin-based, with or without colouring substances, and subsequently introducing the paste obtained inside predetermined moulds; the reflecting or transparent panel or layers of silver or coloured paper can also be previously inserted inside the above moulds.

The end-product thus obtained can also be subsequently coupled with transparent or reflecting panels and/or layers of silver paper.

Ornamental items, coating panels and worktops, end-products for flooring, ceilings and fitting accessories and/or end-products for urban fittings and the building industry in general, are thus obtained.

In order to lighten the final product, the end-products can also be produced by interposing one or more layers of light plastic material containing air, such as so-called "bubble" material, inside the structure, suitable for creating an air cushion, possibly curved or appropriately shaped and possibly coupled with transparent or reflecting panels and/or layers of silver paper and/or specific panels, ferrous and non-ferrous, suitably coloured.

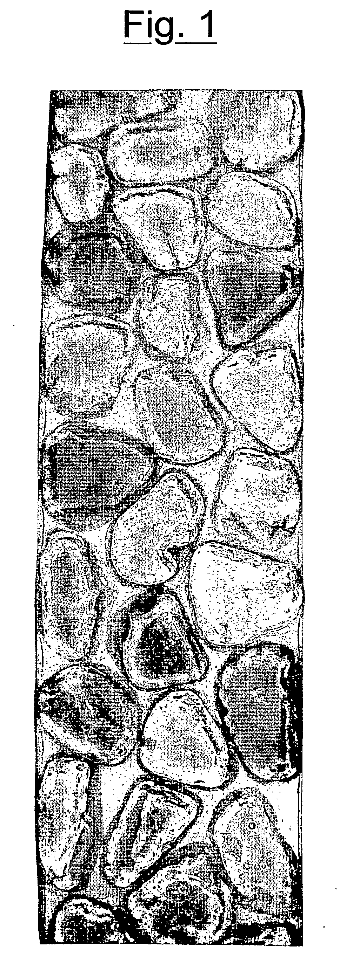

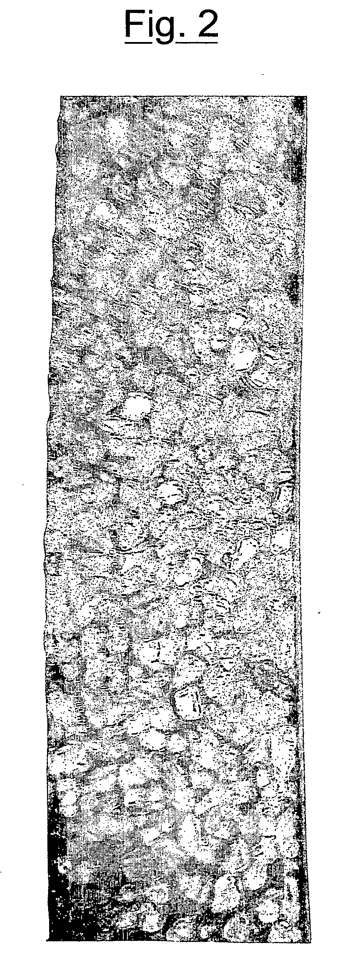

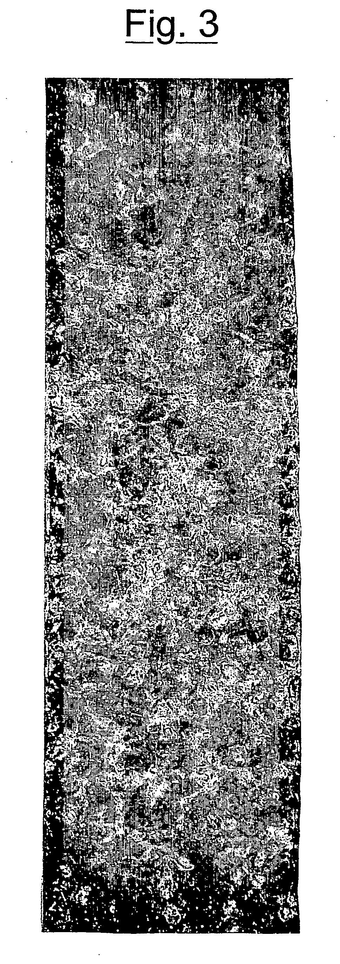

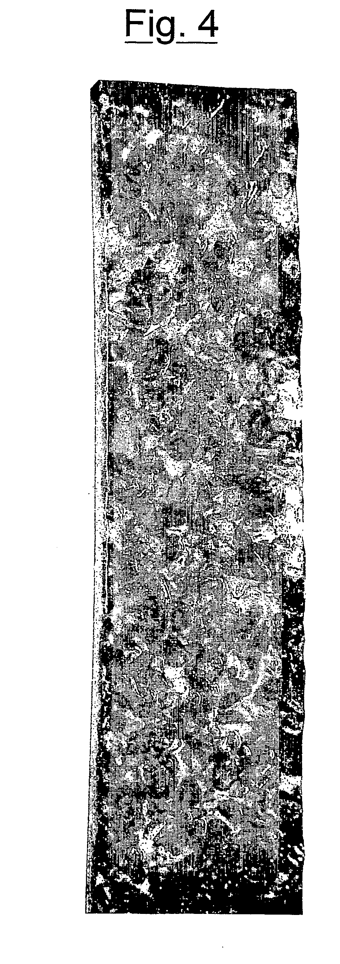

Further objectives and advantages of the present invention will appear evident from the following description relating to illustrative and preferred but non-limiting embodiment examples of end-products for civil and urban building, and from the enclosed figures (figures 1-6) which show portions of end-products differing in form and colouring, according to the invention.

The glass material and/or crystal, used according to the invention, derive from processing processes which can envisage manual or automated operations, also through the recovery of the raw material from relative semi-processed products, and the disposal of the remaining non-utilizable material.

In particular, according to preferred illustrative and non-limiting embodiments of the present invention, the crystal currently used mainly derives from the recovery of the glass of electronic equipment in disuse, such as old kinescopes, by suitably separating the iron which forms the outer framework of the screen of kinescopes, from the screen and glass of the cone.

This operation can be effected according to manual procedures, by means of a fixed circular saw and/or by means of a laser cutting operation, or by means of magnetic systems, and subsequently brushing the phosphorous powders (manually or with chemical substances), in order to obtain an optimum size of the components for their re-melting, and/or effecting further fragmentation and sieving operations of the material removed and subdivided.

The process for the recovery of the crystal from kinescopes can also be effected with automatic or automated procedures, by means of specific machines, suitable for demolishing the kinescope, cleaning the glass from the particles of phosphorous and other heavy coating metals, collecting and transferring the crystal fragments and suction of the phosphorous powder.

When the glass material has been collected, whatever procedure may have been used, the glass or crystal fragments or granules are automatically or manually transferred into one or more machines or drum tumblers, functioning with washing water or also dry, and rolled inside a basket or other containment element, rotating in a single direction or alternatively in one direction and then in the opposite direction, in order to also obtain the smoothing and partial rounding of the above fragments.

In particular, these fragments or granules of glass material can be positioned inside machines, such as washing machines and/or barrel or drum tumbler concrete mixers, whose basket-shaped containment element can also contain a suitable quantity of water (in which, in this case, the granules of glass material are immersed) and then roll in one direction and/or in the opposite direction.

In alternative embodiments, the granules can be transferred, either automatically or manually, into one or more cement mixers or containment barrels or drum tumblers, whose internal basket rotates in a single direction or in one direction and in the opposite direction, for pre-established times.

Each drum tumbler can also be maintained in depression and operated under dry conditions, in order to obtain suitably dimensioned, cleaned and smoothed granules of glass material.

In any case, the definitive form and cleaning of these granules is obtained by abrasion of the fragments of glass material which continue to roll inside the basket of the drum tumbler, in one direction and/or in the opposite direction, followed by a suction phase of the powders and other portions of material detached from each granule, due to the movement of the above basket.

Finally, the containment element of the granules (basket of the washing machine or drum tumbler) can be equipped with a series of holes, having suitable dimensions, suitable for discharging, during the movement, the powders and small pieces of crystal and/or coating metal inside and outside the cone of kinescopes, which are formed as a result of the continuous impact and abrasion of the granules between each other and against the walls of the basket of the washing machine or drum tumbler.

In this way, granules of glass material are obtained, having various forms and dimensions and different shades, which are suitably and specifically smoothed, rounded and/or beaten, following the treatment described above.

After discharging the powders, the granules are then removed, cleaned, selected and mixed with chemical binders, such as resins and/or specific catalysts and optionally with other colouring substances, obtaining a sufficiently fluid paste which, when immersed in certain moulds and after being left to harden, allows the production of ornamental objects, coating panels, table tops and furniture in general, light diffusion screens and fitting accessories in general, wall coatings, thresholds and end-products for fittings for civil and urban building in general, such as those illustrated in the enclosed figures 1-6, which differ in the variety, form and colour of the crystal granules.

Once the catalyzation process of the resin has been completed, the end-products are extracted from the moulds; the above end-products, compact and resistant, have a substantially smooth lower surface, due to the accumulation of the fluid resin in the lower part of the mould, during the catalyzation, and the upper surface is rough, due to the presence of granules of glass material on the surface, or also smooth in the case of the total immersion of the granules (figures 1-4).

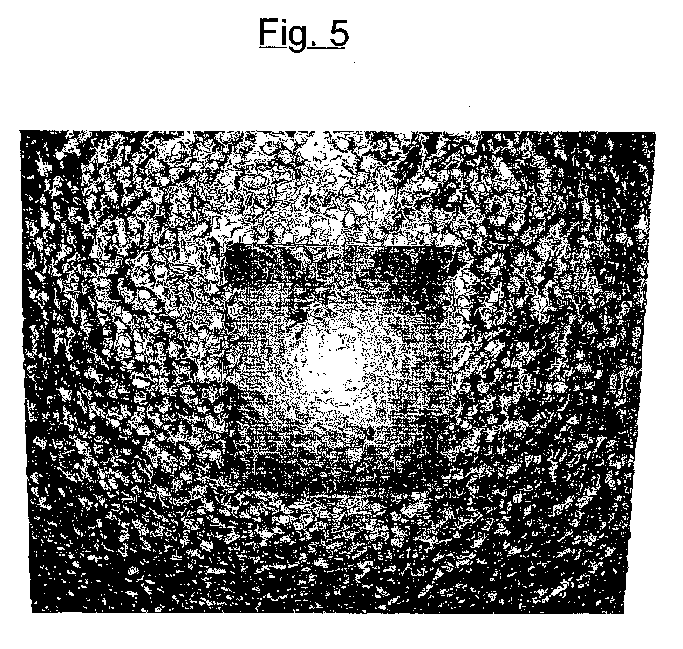

One or more transparent or reflecting panels and/or layers of silver paper and/or layers of plastic material containing air, such as so-called "bubble" material, possibly curved or suitably shaped, can also be coupled with the layers of glass material thus obtained, during the catalyzation phase of the resin, in order to guarantee an ideal aesthetic effect, at the same time giving the structure a particular luminosity and effectiveness having a rare aesthetic impact, due to the combination of reflections between the facets of the crystal, the various chromatic shades of the crystal selected, and the coupled reflecting panels (as in the embodiment example illustrated in figure 5 enclosed).

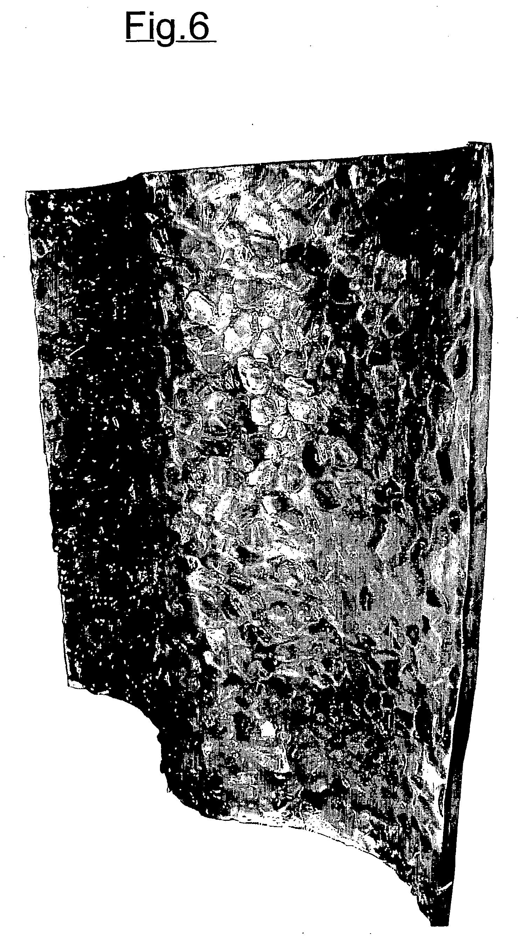

Decorative elements, ornamental objects and fitting accessories in general, thresholds, end-products for fittings for civil and urban building, coating panels of walls and ceilings (as in the embodiment example of figure 6) and furniture in general, in addition to light diffusion screens (as in the embodiment example of figure 5), are obtained in particular, which differ in the variety and form of the granules of glass material and different colourings.

The end-products can also be perforated, in certain areas, to allow them to be hooked to generic supporting structures and for their rapid and non-destructive substitution.

The characteristics of the end-products for civil and urban building, object of the present invention, appear evident from the above description, as also the advantages.

## Claims

1. End-products for civil and urban building, easy to be used for ornamental purposes and/or for coatings in general, such as for example shaped coating panels, furniture tops, light diffusion screens, as well as fitting accessories and ornamental and/or structural objects in general, comprising a panel including one or more first layers of shaped and/or curved glass-based material, wherein each of said first layers consists of glass granules or fragments with smoothed surfaces having crystal-like appearance, said glass granules or fragments being immersed in a chemical binding element and being joined to each other by said chemical binding element, and wherein at least one second layer, made of reflective material, is coupled with said one or more first layers of shaped and/or curved glass-based material, **characterised in that** said at least one second layer consists of a panel made of reflective material, such as silver paper.

2. End-products according to claim 1, **characterised in that** said one or more first layers of shaped and/or curved glass-based material are coupled with coloured layers, made of reflective or transparent material.

3. End-products according to claim 1, **characterised in that** said one or more first layers of shaped and/or curved glass-based material are also coupled with at least one layer of plastic material, preferably of the type comprising air cushions, such as a so-called "bubble" material.

4. End-products according to claim 1, **characterised in that** said chemical binding element comprises resins.

5. End-products according to claim 1, **characterised in that** said glass granules or fragments consist of glass pieces having crystal-like appearance and coming from the demolition of kinescopes.

6. End-products according to claim 1, **characterised in that** said end-products are perforated in certain areas for hooking to walls or supporting elements and for their rapid and non-destructive substitution.

## Patentansprüche

1. Endprodukte für zivile und städtische Gebäude, die einfach zu verwenden sind für Verzierungszwecke und/oder für Beschichtungen im Allgemeinen, wie beispielsweise geformte Beschichtungspaneele, Möbeldecklagen, Lichtstreuscheiben, sowie Ausstattungszubehör und ornamentale und/oder strukturelle Objekte im Allgemeinen, aufweisend ein Paneel enthaltend eine oder mehrere erste Schichten von geformtem und/oder gekrümmtem glasbasiertem Material, wobei jede der ersten Schichten aus Glaskörnchen oder Fragmenten mit geglätteten Oberflächen besteht, die eine kristallartige Erscheinung haben, wobei die Glaskörnchen oder Fragmente in ein chemisches Bindeelement getränkt sind und durch das chemische Bindelement miteinander verbunden sind, und wobei mindestens eine aus reflektierendem Material hergestellte zweite Schicht mit der einen oder den mehreren ersten Schichten von geformtem und/oder gekrümmtem glasbasiertem Material verbunden ist, **dadurch gekennzeichnet, dass** die mindestens eine zweite Schicht aus einem Paneel besteht, das aus reflektierendem Material hergestellt ist, wie beispielsweise Silberpapier.

2. Endprodukte gemäß Anspruch 1, **dadurch gekennzeichnet, dass** die eine oder mehrere erste Schichten von geformtem und/oder gekrümmtem glasbasiertem Material mit geformten Schichten verbunden ist, die aus reflektierendem oder transparentem Material hergestellt sind.

3. Endprodukte gemäß Anspruch 1, **dadurch gekennzeichnet, dass** die eine oder mehrere ersten Schichten von geformtem und/oder gekrümmtem glasbasiertem Material auch mit mindestens einer Schicht aus Kunststoffmaterial verbunden ist, vorzugsweise des Typs, der Luftkissen aufweist, wie ein sogenanntes Blasenmaterial.

4. Endprodukte gemäß Anspruch 1, **dadurch gekennzeichnet, dass** das chemische Bindeelement Harze aufweist.

5. Endprodukte gemäß Anspruch 1, **dadurch gekennzeichnet, dass** die Glaskörnchen oder Fragmente aus Glasstücken bestehen, die eine kristallartige Erscheinung haben und aus der Zerstörung von Bildwiedergaberöhren kommen.

6. Endprodukte gemäß Anspruch 1, **dadurch gekennzeichnet, dass** die Endprodukte in bestimmten Bereichen gelocht sind zum Aufhängen an Wänden oder Tragelementen und für deren schnelle und nicht zerstörende Ersetzung.

## Revendications

1. Produits finis pour génie civil et constructions urbaines, faciles à utiliser à des fins ornementales et/ou pour des revêtements en général, tels que, par exemple, des panneaux de revêtement ayant une certaine forme, des dessus de meubles, des écrans de diffusion de lumière, ainsi que des accessoires d'adaptation et des objets décoratifs et/ou structurels en général, comprenant un panneau comportant une ou plusieurs premières couches de matériau à base de verre façonné et/ou incurvé, dans lesquels chacune desdites premières couches est constituée de fragments ou de granules de verre ayant des surfaces lissées et un aspect de type cristal, lesdits fragments ou granules de verre étant immergés dans un élément de liaison chimique et étant reliés entre eux par ledit élément de liaison chimique, et dans lesquels au moins une deuxième couche, réalisée dans un matériau réfléchissant, est couplée auxdites premières couches au nombre d'une ou de plusieurs de matériau à base de verre façonné et/ou incurvé, **caractérisés en ce que** ladite deuxième couche au nombre d'au moins une est constituée d'un panneau composé d'un matériau réfléchissant, tel que du papier d'argent.

2. Produits finis selon la revendication 1, **caractérisés en ce que** lesdites premières couches au nombre d'une ou de plusieurs de matériau à base de verre façonné et/ou incurvé sont couplées à des couches colorées, réalisées dans un matériau réfléchissant ou transparent.

3. Produits finis selon la revendication 1, **caractérisés en ce que** lesdites premières couches au nombre d'une ou de plusieurs de matériau à base de verre façonné et/ou incurvé sont également couplées à au moins une couche de matière plastique, de préférence du type comprenant des coussins d'air, telle que ce que l'on appelle un matériau "à bulles".

4. Produits finis selon la revendication 1, **caractérisés en ce que** ledit élément de liaison chimique comprend des résines.

5. Produits finis selon la revendication 1, **caractérisés en ce que** lesdits fragments ou granules de verre sont constitués de morceaux de verre ayant un aspect de type cristal et provenant de la démolition de cinéscopes.

6. Produits finis selon la revendication 1, **caractérisés en ce que** lesdits produits finis sont perforés dans certaines zones pour l'accrochage à des parois ou à des éléments porteurs, et pour leur remplacement rapide et non destructif.
